(19) Europäisches Patentamt
European Patent Office
Office européen des brevets

(11) **EP 4 350 974 A2**

(12) **EUROPEAN PATENT APPLICATION**

(43) Date of publication:
**10.04.2024 Bulletin 2024/15**

(21) Application number: **23219494.4**

(22) Date of filing: **21.12.2023**

(51) International Patent Classification (IPC):
*H02P 21/16* $^{(2016.01)}$     *H02P 23/14* $^{(2006.01)}$

(52) Cooperative Patent Classification (CPC):
**H02P 21/16; H02P 23/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2023 CN 202310431466**

(71) Applicant: **XPT EDS (Hefei) Co., Ltd.
Hefei City, Anhui 230601 (CN)**

(72) Inventors:
• **WANG, Kai
230601 Hefei City (CN)**
• **XIA, Justin
230601 Hefei City (CN)**

(74) Representative: **EIP
Fairfax House
15 Fulwood Place
London WC1V 6HU (GB)**

(54) **METHOD AND APPARATUS FOR DETERMINING ROTOR RESISTANCE OF INDUCTION MOTOR**

(57)     The disclosure relates to a method and apparatus for determining a rotor resistance of an induction motor. The method includes the following steps: obtaining a stator current reference, a stator voltage reference, and a stator current frequency of the induction motor; determining, on the basis of an equivalent circuit of the induction motor, a back-EMF inductance of the induction motor according to a voltage division principle and based on the stator current reference, the stator voltage reference, and the stator current frequency, where the back-EMF inductance is defined as an impedance of the induction motor excluding that for a stator resistance divided by the stator current frequency; and determining, on the basis of the equivalent circuit of the induction motor, the rotor resistance according to the definition of the back-EMF inductance and based on the determined back-EMF inductance.

FIG. 2

**Description**

**TECHNICAL FIELD**

The disclosure relates to the field of induction motors, and more specifically to a method and apparatus for determining a rotor resistance of an induction motor, a computer device for implementing the method, and a computer storage medium for implementing the method.

**BACKGROUND**

Currently, the methods commonly used in the prior art for estimating a rotor resistance or rotor temperature of an induction motor mainly include the thermal network method and the data-driven method. The thermal network method requires to establish a complex physical model and to carry out detailed modeling and simulation of the motor, which involves a large workload and has a long response time. In addition, because of a complex structure of the motor model, neither the simulation software nor the theoretical formula could accurately reflect an actual situation, resulting in a great deviation between the estimated resistance or temperature and the actual situation. The data-driven method is intended to input the sampled current, voltage, temperature, speed, and other data into an algorithm model for training. However, the accuracy of estimation results of this method is limited by the quality and amount of training data. It is difficult to collect a large amount of data due to difficulties in collecting the actual rotor resistance and temperature. With insufficient data, the data-driven method confronts the risk of over-fitting and inaccuracy.

**SUMMARY**

In order to solve, or at least mitigate one or more of the problems described above, the disclosure provides a method and apparatus for determining a rotor resistance of an induction motor, a computer device for implementing the method, and a computer storage medium for implementing the method. The solution provided in the disclosure enables determining the rotor resistance on-line and in real time without complex modeling, reducing the calculation amount and improving the response speed while ensuring the accuracy of results.

According to a first aspect of the disclosure, there is provided a method for determining a rotor resistance of an induction motor, including the following steps: obtaining a stator current reference, a stator voltage reference, and a stator current frequency of the induction motor; determining, on the basis of an equivalent circuit of the induction motor, a back-EMF inductance of the induction motor according to a voltage division principle and based on the stator current reference, the stator voltage reference, and the stator current frequency, where the back-EMF inductance is defined as an impedance of the induction motor excluding that for a stator resistance divided by the stator current frequency; and determining, on the basis of the equivalent circuit of the induction motor, the rotor resistance according to the definition of the back-EMF inductance and based on the determined back-EMF inductance.

As an alternative or addition to the above solution, in a method according to an embodiment of the disclosure, step A includes: obtaining three-phase current references $i_a^*$, $i_b^*$, and $i_c^*$ of the induction motor; obtaining a d-axis stator current reference $i_{sd}^*$ and a q-axis stator current reference $i_{sq}^*$ according to Clarke transform and Park transform; and obtaining a d-axis stator voltage reference $u_{sd}^*$ and a q-axis stator voltage reference $u_{sq}^*$ outputted by a PI controller that controls an output voltage based on a current error.

As an alternative or addition to the above solution, in a method according to an embodiment of the disclosure, step B includes: determining the back-EMF inductance Lε of the induction motor by using a first model established according to the voltage division principle, where the first model satisfies the following equation:

$$L_\varepsilon = \frac{\sqrt{|u_s^*|^2 + R_s^2 |i_s^*|^2 - 2R_s(u_{sd}^* i_{sd}^* + u_{sq}^* i_{sq}^*)}}{\omega_e |i_s^*|}$$

where $u_s^*$ is the stator voltage reference, $i_s^*$ is the stator current reference, $u_{sd}^*$ and $u_{sq}^*$ are respectively the d-axis stator voltage reference and the q-axis stator voltage reference, $i^*_{sd}$ and $i^*_{sq}$ are respectively the d-axis stator current reference and the q-axis stator current reference, $R_s$ is the stator resistance, and $\omega_e$ is the stator current frequency.

As an alternative or addition to the above solution, in a method according to an embodiment of the disclosure, the method further includes determining the stator resistance Rs by using an off-line parameter identification method, and the stator current frequency ωe is determined by using the following formula:

$$\omega_e = \omega_r + \omega_s$$

$$\omega_s = \frac{\hat{R}_r i^*_{sq}}{L_m i^*_{sd}}$$

where $\omega_r$ is a motor rotor speed, $\omega_s$ is a slip, $\hat{R}_r$ is a rotor resistance reference, $i^*_{sd}$ and $i^*_{sq}$ are respectively a d-axis stator current reference and a q-axis stator current reference, and $L_m$ is a magnetizing inductance.

As an alternative or addition to the above solution, in a method according to an embodiment of the disclosure, step C includes: establishing a second model according to the definition of the back-EMF inductance, where the second model satisfies the following equation:

$$L_\varepsilon = \left| jL_\sigma + \frac{jL_m}{1 + \frac{j\hat{R}_r i^*_{sq}}{R_r i^*_{sd}}} \right|$$

where $L_\varepsilon$ is the back-EMF inductance, $L_\sigma$ is a leakage inductance, $L_m$ is a magnetizing inductance, $\hat{R}_r$ is a rotor resistance reference, $R_r$ is a real-time rotor resistance, and $i^*_{sd}$ and $i^*_{sq}$ are a d-axis stator current reference and a q-axis stator current reference, respectively.

As an alternative or addition to the above solution, in a method according to an embodiment of the disclosure, step C includes determining a real-time rotor resistance Rr by using the following formula:

$$R_r = \frac{\hat{R}_r i^*_{sq}}{i^*_{sd} \sqrt{\left( \frac{1 + 2\frac{L_\sigma}{L_m}}{\frac{L_\varepsilon}{L_m} - \left(\frac{L_\sigma}{L_m}\right)^2} - 1 \right)}}$$

where $\hat{R}_r$ is a rotor resistance reference, $i^*_{sd}$ and $i^*_{sq}$ are respectively a d-axis stator current reference and a q-axis stator current reference, $L_m$ is a magnetizing inductance, $L_\sigma$ is a leakage inductance, and $L_\varepsilon$ is the back-EMF inductance.

As an alternative or addition to the above solution, in a method according to an embodiment of the disclosure, the method further includes determining the real-time rotor temperature Tr by using the following formula:

$$T_r = \frac{(\frac{R_r}{R_{r,Ref}} - 1)}{\partial_r} + T_{ref}$$

where $R_r$ is a real-time rotor resistance, $\partial_r$ is a temperature rise coefficient of a rotor resistance, $T_{ref}$ is a reference temperature, and $R_{r,Ref}$ is a rotor resistance at the reference temperature $T_{ref}$.

As an alternative or addition to the above solution, in a method according to an embodiment of the disclosure, the method further includes: calibrating a back-EMF inductance reference in a motor testing stage to obtain a correspondence between the back-EMF inductance reference and a motor rotor speed reference as well as a torque reference, and storing the correspondence in a look-up table, where calibrating the back-EMF inductance reference includes: when the motor rotor speed reference and the torque reference are constant, adjusting a rotor resistance reference to change a real-time motor torque, and determining a back-EMF inductance, obtained when the real-time motor torque is equal to the torque reference, as the back-EMF inductance reference.

As an alternative or addition to the above solution, in a method according to an embodiment of the disclosure, the method further includes: in a normal operation stage of the motor, obtaining a back-EMF inductance reference corresponding to a motor rotor speed reference and a torque reference by looking up the table; correcting the rotor resistance reference in real time through feedback compensation with a difference between the back-EMF inductance reference and the back-EMF inductance determined in step B, such that the difference is zero; and determining a real-time rotor temperature based on the rotor resistance reference that is obtained when the difference is zero.

As an alternative or addition to the above solution, in a method according to an embodiment of the disclosure, the determining a real-time rotor temperature based on the rotor resistance reference that is obtained when the difference is zero includes determining the real-time rotor temperature Tr according to the following formula:

$$T_r = \frac{(\frac{\hat{R}_r}{R_{r,Ref}} - 1)}{\partial_r} + T_{ref}$$

where $\hat{R}_r$ is the rotor resistance reference, $\partial_r$ is a temperature rise coefficient of a rotor resistance, $T_{ref}$ is a reference temperature, and $R_{r,Ref}$ is a rotor resistance at the reference temperature $T_{ref}$.

According to a second aspect of the disclosure, there is provided an apparatus for determining a rotor resistance of an induction motor, including: an information obtaining module configured to obtain a stator current reference, a stator voltage reference, and a stator current frequency of the induction motor; a back-EMF inductance calculation module configured to determine, on the basis of an equivalent circuit of the induction motor, a back-EMF inductance of the induction motor according to a voltage division principle and based on the stator current reference, the stator voltage reference, and the stator current frequency, where the back-EMF inductance is defined as an impedance of the induction motor excluding that for a stator resistance divided by the stator current frequency; and a rotor resistance determining module configured to determine, on the basis of the equivalent circuit of the induction motor, the rotor resistance according to the definition of the back-EMF inductance and based on the determined back-EMF inductance.

According to a third aspect of the disclosure, there is provided a computer device, including: a memory; a processor; and a computer program stored on the memory and runnable on the processor, where the computer program runs to cause any one of the methods according to the first aspect of the disclosure to be performed.

According to a fourth aspect of the disclosure, there is provided a computer storage medium including instructions, where the instructions run to perform any one of the methods according to the first aspect of the disclosure.

The solution for determining a rotor resistance of an induction motor according to one or more embodiments of the disclosure defines a new induction motor parameter "back-EMF inductance" on the basis of an equivalent circuit of the induction motor, determines the back-EMF inductance according to a voltage division principle, and inversely derives the rotor resistance of the induction motor according to the definition of the back-EMF inductance. The solution enables determining the rotor resistance on-line and in real time without complex modeling, reducing the calculation amount and increasing the response speed while ensuring the accuracy of results.

**BRIEF DESCRIPTION OF DRAWINGS**

The above-mentioned and/or other aspects and advantages of the disclosure will become more apparent and more readily appreciated from the following description of various aspects in conjunction with the accompanying drawings, in which the same or similar units are denoted by the same reference numerals. In the accompanying drawings:

FIG. 1 is a schematic circuit diagram of an equivalent circuit of an induction motor according to one or more embodiments of the disclosure;
FIG. 2 is a flowchart of a method 20 for determining a rotor resistance of an induction motor according to one or more embodiments of the disclosure;
FIG. 3 is a block diagram of an apparatus 30 for determining a rotor resistance of an induction motor according to one or more embodiments of the disclosure; and
FIG. 4 is a block diagram of a computer device 40 according to one or more embodiments of the disclosure.

**DESCRIPTION OF EMBODIMENTS**

The following descriptions of the specific embodiments are merely exemplary in nature, and are not intended to limit the disclosed technologies or the application and use of the disclosed technologies. In addition, there is no intention to be bound by any expressed or implied theory presented in the foregoing Technical Field and Background Art, or the following Detailed Description.

In the following detailed descriptions of the embodiments, many specific details are set forth to provide a more thorough understanding of the disclosed technologies. However, it is obvious for those of ordinary skill in the art that the disclosed technologies can be practiced without these specific details. In other instances, well-known features are not detailed, to avoid complicating the descriptions unnecessarily.

The terms such as "include" and "comprise" are used to indicate that in addition to the units and steps that are directly and clearly described in this specification, other units and steps that are not directly or clearly described are not excluded in the technical solutions of the disclosure. The terms such as "first" and "second" are not used to indicate sequences of units in terms of time, space, size, etc., and are merely used to distinguish between the units.

A rotor resistance of an induction motor is one of the important factors affecting motor parameters. The rotor resistance is generally a variable, the size of which may be affected by the rotor temperature, operating conditions, and other factors. An accurate calculation of the rotor resistance can improve the control accuracy of a motor controller on the current of the induction motor to adapt to different operating conditions, such that the induction motor is kept in the best operating state thereof, thereby improving the efficiency and performance of the motor. In addition, an excessively high or low rotor resistance of the induction motor may adversely affect the operation of the motor. For example, an excessively high rotor resistance may cause problems such as heated motor, reduced efficiency, and shortened service life. Therefore, these problems may be avoided by determining the rotor resistance in real time so as to prolong the service life of the motor.

In general, the rotor resistance of the induction motor cannot be measured directly and needs to be calculated by an indirect method. However, a conventional on-line and real-time calculation method requires the use of complex algorithms and motor models, which consumes a lot of calculation resources. In view of this, the disclosure provides a method for determining the rotor resistance relying on a simple equivalent circuit of the induction motor so as to reduce the calculation amount and improve the response speed while ensuring the accuracy of results.

Various exemplary embodiments according to the disclosure will be described below in detail with reference to the accompanying drawings.

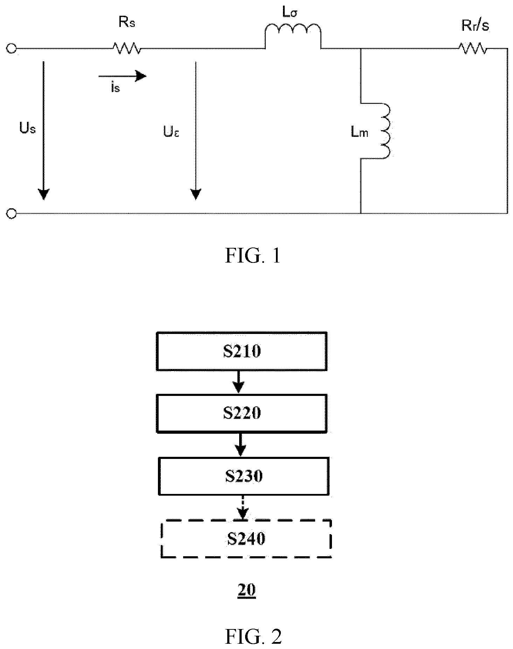

FIG. 1 is a schematic circuit diagram of an equivalent circuit of an induction motor according to one or more embodiments of the disclosure.

As shown in FIG. 1, us is an actual motor phase voltage, Rs is a stator resistance, is is an actual motor phase current, uε is an extended back-EMF (i.e., a voltage of the induction motor excluding that for the stator resistance), Lσ is a leakage inductance, Lm is a magnetizing inductance, Rr is a real-time rotor resistance, and s is a motor slip ratio. In a steady state, the motor slip ratio s is a ratio of a slip (i.e., a difference between a stator current frequency and a motor rotor speed) to the motor rotor speed, that is,

$$S = \frac{\omega_s}{\omega_e} = \frac{\omega_e - \omega_r}{\omega_e} \qquad \text{(Formula 1)}$$

In the formula, $\omega_e$ is the stator current frequency, $\omega_r$ is the motor rotor speed, and $\omega_s$ is the slip.

On the basis of the equivalent circuit of the induction motor shown in FIG. 1, the following formula can be obtained according to a voltage division principle:

$$u_\varepsilon = u_s - R_s i_s$$

(Formula 2)

The following formula can be further derived:

$$|u_\varepsilon| = \sqrt{|u_s|^2 + R_s^2|i_s|^2 - 2R_s(u_{sd}i_{sd} + u_{sq}i_{sq})}$$

(Formula 3)

In the formula, isd and isq are respectively an actual d-axis stator current and an actual q-axis stator current of the motor, and usd and usq are an actual d-axis stator voltage and an actual q-axis stator voltage of the motor, respectively.

In this regard, the applicant has found that even with an inaccurate magnetic field orientation (where the actual motor phase current is is different from a stator current reference $i_s^*$ set in the motor control software, and the actual motor phase voltage us is different from a stator voltage reference $u_s^*$ set in the motor control software), as long as the current, voltage, and power satisfy a given condition (i.e., the following Formula 4 is true), Formula 4 can be substituted into the above Formula 3, that is, |uε| is calculated by using the voltage, current, and other signals set in the motor control software:

$$\left[ \begin{array}{l} |u_s|^2 = |u_s^*|^2 \\ |i_s|^2 = |i_s^*|^2 \\ (u_{sd}i_{sd} + u_{sq}i_{sq}) = (u_{sd}^* i_{sd}^* + u_{sq}^* i_{sq}^*) \end{array} \right.$$

(Formula 4)

In the formula, $u_{sd}^*$ and $u_{sq}^*$ are respectively a d-axis stator voltage reference and a q-axis stator voltage reference set in the motor control software, and $i_{sd}^*$ and $i_{sq}^*$ are a d-axis stator current reference and a q-axis stator current reference set in the motor control software, respectively. The above Formula 4 is then substituted into the above Formula 3 to obtain the following Formula 5:

$$|u_\varepsilon| = \sqrt{|u_s^*|^2 + R_s^2|i_s^*|^2 - 2R_s(u_{sd}^* i_{sd}^* + u_{sq}^* i_{sq}^*)}$$

(Formula 5)

Further, on the basis of the equivalent circuit of the induction motor, the disclosure innovatively provides a new definition of inductance, i.e., back-EMF inductance. The back-EMF inductance is defined herein as an impedance of the induction motor excluding that for the stator resistance divided by the stator current frequency (that is, a synchronous frequency). The back-EMF inductance defined herein has the following characteristics. When field-orientated control(FOC) is applied, the back-EMF inductance is only affected by the current and motor parameters, but not by the speed and stator temperature.

A first model for the back-EMF inductance Lε may be established according to the above Formula 5, and the first model satisfies the following equation:

$$L_\varepsilon = \frac{\sqrt[10]{|u_s^*|^2 + R_s^2|i_s^*|^2 - 2R_s(u_{sd}^* i_{sd}^* + u_{sq}^* i_{sq}^*)}}{\omega_e|i_s^*|}$$

(Formula 6)

It can be seen from the above Formulas 5 and 6 that the magnitude of the extended back-EMF |uε| and the back-EMF inductance Lε are irrelevant to the magnitude of the real-time rotor resistance Rr. Therefore, |uε| and Lε can be calculated according to $i_{sd}^*$, $i_{sq}^*$, $u_{sd}^*$, and $u_{sq}^*$ set in the motor control software regardless of the magnetic field orientation, thus eliminating the influence of orientation errors caused by inaccurate rotor temperature and rotor resistance.

In addition, with continued reference to the equivalent circuit of the induction motor shown in FIG. 1, the following formula can be obtained according to Ohm's law and the impedance formula:

$$u_\varepsilon = i_s \cdot \left( j\omega_e L_\sigma + \frac{j\omega_e L_m \, R_r/_s}{R_r/_s + j\omega_e L_m} \right)$$

(Formula 7)

According to the characteristics of the slip ωs and the stator current frequency ωe, the following formulas can be derived:

$$\omega_s = \frac{\hat{R}_r i_{sq}^*}{L_m i_{sd}^*}$$

(Formula 8)

$$\frac{R_r}{s} = \frac{R_r \omega_e}{\omega_s} = \frac{R_r L_m i_{sd}^* \omega_e}{\hat{R}_r i_{sq}^*}$$

(Formula 9)

In the formulas, $\hat{R}_r$ is a rotor resistance reference. Further, the above Formulas 8 and 9 can be substituted into Formula 7 to derive a functional relationship between the extended back-EMF uε and the real-time rotor resistance Rr:

$$u_\varepsilon = \omega_e i_s \cdot \left( jL_\sigma + \frac{jL_m}{1 + \frac{j\hat{R}_r i_{sq}^*}{R_r i_{sd}^*}} \right)$$

(Formula 10)

On the basis of the above Formula 10, a second model for the back-EMF inductance Lε can be further established according to the definition of the back-EMF inductance, and the second model satisfies the following equation:

$$L_\varepsilon = \left| \frac{u_\varepsilon}{\omega_e i_s} \right| = \left| jL_\sigma + \frac{jL_m}{1 + \frac{j\hat{R}_r i_{sq}^*}{R_r i_{sd}^*}} \right| = L_m \left( \frac{1 + 2\frac{L_\sigma}{L_m}}{1 + \left( \frac{i_{sq}^*}{i_{sd}^*} \cdot \frac{\hat{R}_r}{R_r} \right)^2} + \left( \frac{L_\sigma}{L_m} \right)^2 \right)$$ (Formula 11)

According to the above Formula 11, a calculation formula for the real-time rotor resistance Rr can be inversely derived as follows:

$$R_r = \frac{\hat{R}_r i_{sq}^*}{i_{sd}^* \sqrt{\left( \frac{1 + 2\frac{L_\sigma}{L_m}}{\frac{L_\varepsilon}{L_m} - \left( \frac{L_\sigma}{L_m} \right)^2} - 1 \right)}}$$ (Formula 12)

In other words, the real-time rotor resistance Rr can be determined according to Lε (e.g., Lε calculated according to the first model) as long as $i_{sd}^*$, $i_{sq}^*$, and $\hat{R}$ set or sampled in the motor control software are obtained and Lσ and Lm are obtained.

Continued reference is made to FIG. 2 below, which is a flowchart of a method 20 for determining a rotor resistance of an induction motor according to one or more embodiments of the disclosure.

As shown in FIG. 2, in step S210, a stator current reference, a stator voltage reference, and a stator current frequency of the induction motor are obtained. The stator current reference and the stator voltage reference as described herein refer to reference values set in the motor control software for the stator current and stator voltage or stator current and voltage values sampled in the motor control software.

In one example, three-phase current references $i_a^*$, $i_b^*$, and $i_c^*$ of the induction motor are first obtained, where the three-phase current references $i_a^*$, $i_b^*$, and $i_c^*$ can be obtained from a current sensor module arranged at a three-phase line of the motor in the motor control software. Next, a d-axis stator current reference $i_{sd}^*$ and a q-axis stator current reference $i_{sq}^*$ are obtained through Clarke transform and Park transform on the three-phase current references $i_a^*$, $i_b^*$, and $i_c^*$. After the d-axis stator current reference and the q-axis stator current reference $i_{sd}^*$ and $i_{sq}^*$ are obtained, a difference between the actual d-axis stator current and the d-axis stator current reference $i_{sd}^*$ as well as a difference between the actual q-axis stator current and the q-axis stator current reference $i_{sq}^*$ are inputted into a PI controller (proportional integral controller), and a d-axis stator voltage reference $u_{sd}^*$ and a q-axis stator voltage reference $u_{sq}^*$ outputted by the PI controller that controls an output voltage based on a current error are obtained.

In one example, the stator current frequency ωe can be determined by using the above Formulas 1 and 8, that is,

$$\omega_e = \omega_r + \omega_s = \omega_r + \frac{\hat{R}_r i_{sq}^*}{L_m i_{sd}^*}$$

(Formula 13)

In step S220, on the basis of an equivalent circuit of the induction motor, a back-EMF inductance of the induction motor is determined according to a voltage division principle and based on the stator current reference, the stator voltage reference, and the stator current frequency.

The equivalent circuit of the induction motor used in the method 20 may be the equivalent circuit of the induction motor shown in FIG. 1 or another equivalent circuit. It is to be noted that the method 20 is applicable to any equivalent circuit of the induction motor, since other equivalent circuits of the induction motor can all be converted to the simplified equivalent circuit of the induction motor as shown in FIG. 1.

Exemplarily, on the basis of the equivalent circuit of the induction motor shown in FIG. 1, step S220 includes calculating the magnitude of the extended back-EMF $|u_\varepsilon|$ according to the above Formula 5 by using the voltage, current, and other signals set or sampled in the motor control software, and determining the back-EMF inductance $L_\varepsilon$ of the induction motor by using the first model that satisfies Formula 6. It can be seen from Formulas 5 and 6 that the magnitude of the extended back-EMF $|u_\varepsilon|$ and the back-EMF inductance $L_\varepsilon$ are irrelevant to the magnitude of the real-time rotor resistance Rr. Therefore, $|u_\varepsilon|$ and $L_\varepsilon$ can be calculated according to $u_{sd}^*$, and $u_{sq}^*$ set or sampled in the motor control software regardless of the magnetic field orientation, thus eliminating the influence of orientation errors caused by inaccurate rotor temperature and rotor resistance.

It can be seen from Formula 6 that the calculation of the back-EMF inductance $L_\varepsilon$ is premised on knowing the stator resistance Rs. Therefore, the method 20 optionally includes determining the stator resistance Rs by using an off-line parameter identification method. In addition, the method 20 may further include determining the magnetizing inductance Lm and the leakage inductance Lσ by using an off-line parameter identification method. The off-line parameter identification method refers to applying a series of excitation signals to a motor before it runs and obtaining related parameters of the motor through motor response. The off-line parameter identification method includes but is not limited to a locked-rotor test method, an idling test method, off-line identification in a static state, automatic identification by using a model reference adaptive system, etc. The disclosure does not limit the off-line parameter identification method that is specifically used.

In step S230, on the basis of the equivalent circuit of the induction motor, the rotor resistance is determined according to the definition of the back-EMF inductance and based on the determined back-EMF inductance.

Optionally, step S230 includes establishing a second model for the back-EMF inductance $L_\varepsilon$ according to the definition of the back-EMF inductance, and the second model satisfies the above Formula 11. Optionally, the calculation formula for the real-time rotor resistance Rr can be inversely derived on the basis of the above Formula 11, as described above in Formula 12, and the real-time rotor resistance Rr can be determined according to the above Formula 12.

Optionally, the method 20 further includes step S240: determining a real-time rotor temperature based on the calculated real-time rotor resistance. In the control of the motor, it is of great significance to obtain the rotor temperature. If the rotor temperature of the motor is excessively high, the permanent magnet is likely to be irreversibly demagnetized in actual operation, resulting in a degradation of the actual performance of the motor. However, the risk of demagnetization can be reduced or eliminated by monitoring the real-time rotor temperature. In addition, the rotor temperature of the motor may further affect the accuracy of torque calculation of the electric drive system, resulting in a deviation of vehicle performance control. In one example, the real-time rotor temperature Tr can be determined by using the following formula:

$$T_r = \frac{(\frac{R_r}{R_{r,Ref}} - 1)}{\partial_r} + T_{ref}$$

(Formula 14)

In the formula, $\partial r$ is a temperature rise coefficient of a rotor resistance, Tref is a reference temperature, and Rr,Ref is a rotor resistance at the reference temperature Tref. Among them, the reference temperature Tref and the rotor resistance Rr,Ref at the reference temperature Tref can be values pre-calibrated before the motor leaves factory, and the temperature rise coefficient $\partial r$ of the rotor resistance is a constant related to the material of the rotor.

In addition, the stator voltage reference may be deviated from the actual motor phase voltage to an extent during the operation of the motor due to inverter non-linear effects such as a dead-time effect and an on-state voltage drop of power semiconductor. Therefore, it is necessary to compensate for the effects of inverter non-linearity on the calculation of the back-EMF inductance. Meanwhile, since the effects of inverter non-linearity on the back-EMF inductance are different at different motor rotor speeds and torques, the back-EMF inductance reference can be pre-calibrated in the motor testing stage by using a fixed motor rotor speed reference and torque reference so as to compensate for the effects of inverter non-linearity on the calculation of the back-EMF inductance through calibration.

Specifically, the method 20 may further include calibrating the back-EMF inductance reference in the motor testing stage to obtain a correspondence between the back-EMF inductance reference and the motor rotor speed reference as well as the torque reference, and storing the correspondence in a look-up table. Optionally, calibrating the back-EMF inductance reference includes: when the motor rotor speed reference and the torque reference are constant, adjusting the rotor resistance reference to change a real-time motor torque, and determining a back-EMF inductance, obtained when the real-time motor torque is equal to the torque reference (where the actual d-axis stator current and the actual q-axis stator current isd and isq are equal to the d-axis stator current reference and the q-axis stator current reference $i_{sd}^*$ and $i_{sq}^*$, respectively), as the back-EMF inductance reference.

Optionally, the method 20 further includes: in a normal operation stage of the motor, obtaining a back-EMF inductance reference corresponding to a motor rotor speed reference and a torque reference under a distinct operating condition by looking up the table, and obtaining the back-EMF inductance calculated in step 220 (for example, by using the first model); correcting the rotor resistance reference in real time through feedback compensation with a difference between the back-EMF inductance reference and the back-EMF inductance calculated in step 220, such that the back-EMF inductance calculated in step 220 is equal to the back-EMF inductance reference obtained by looking up the table, and using the rotor resistance reference at this point as a corrected rotor resistance reference. Finally, the real-time rotor temperature can be determined based on the corrected rotor resistance reference by using the following formula:

$$T_r = \frac{\left(\frac{R_r}{R_{r,Ref}}-1\right)}{\partial_r} + T_{ref}$$

(Formula 15)

The method 20 defines a new induction motor parameter "back-EMF inductance" on the basis of the equivalent circuit of the induction motor, determines the back-EMF inductance according to a voltage division principle, and inversely derives the rotor resistance of the induction motor according to the definition of the back-EMF inductance, thereby enabling determining the rotor resistance on-line and in real time without complex modeling, reducing the calculation amount and improving the response speed while ensuring the accuracy of results. In addition, some embodiments of the method 20 further improve the accuracy of results by pre-calibrating the back-EMF inductance reference to compensate for the effects of inverter non-linearity on the calculation of the back-EMF inductance.

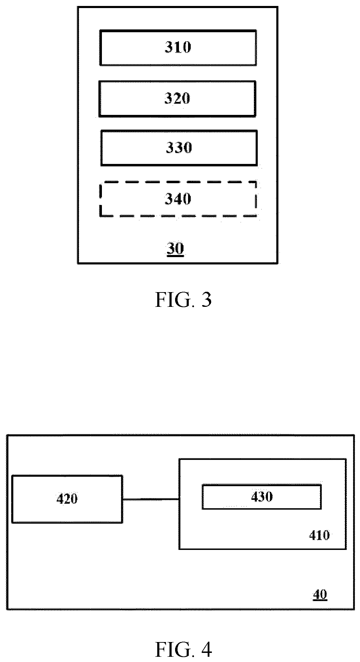

FIG. 3 is a block diagram of an apparatus 30 for determining a rotor resistance of an induction motor according to one or more embodiments of the disclosure. As shown in FIG. 3, the apparatus 30 includes an information obtaining module 310, a back-EMF inductance calculation module 320, and a rotor resistance determining module 330.

The information obtaining module 310 is configured to obtain a stator current reference, a stator voltage reference, and a stator current frequency of the induction motor. Reference may be made to the above description on step S210 for a determining process of the stator current reference, the stator voltage reference, and the stator current frequency, which will not be repeated herein.

The back-EMF inductance calculation module 320 is configured to determine, on the basis of an equivalent circuit of the induction motor, a back-EMF inductance of the induction motor according to a voltage division principle and based on the stator current reference, the stator voltage reference, and the stator current frequency. Reference may be made to the above descriptions on step S220 and Formulas 1-6 for a determining process of the back-EMF inductance of the stator, which will not be repeated herein.

The rotor resistance determining module 330 is configured to determine, on the basis of the equivalent circuit of the induction motor, the rotor resistance according to the definition of the back-EMF inductance and based on the determined back-EMF inductance. Reference may be made to the above descriptions on step S230 and Formulas 7-12 for a determining process of the rotor resistance of the stator, which will not be repeated herein.

Optionally, the apparatus 30 further includes a rotor temperature determining module 340 configured to determine a real-time rotor temperature based on the calculated real-time rotor resistance. Reference may be made to the above description on step S240 for a determining process of the rotor temperature of the stator, which will not be repeated herein. Optionally, the rotor temperature determining module 340 is further configured to obtain, in a normal operation stage of the motor, a back-EMF inductance reference corresponding to a motor rotor speed reference and a torque reference under a distinct operating condition by looking up the table; correct the rotor resistance reference in real time through feedback compensation with a difference between the back-EMF inductance reference and the back-EMF inductance calculated by the back-EMF inductance calculation module 320, such that the difference is zero, and determine the real-time rotor temperature based on the rotor resistance reference that is obtained when the difference is zero. Exemplarily, the real-time rotor temperature can be determined by using Formula 15 described above, which will not be repeated herein.

Continued reference is made to FIG. 4, which is a block diagram of a computer device 40 according to one or more embodiments of the disclosure.

As shown in FIG. 4, the computer device 40 includes a memory 410, a processor 420, and a computer program 430 stored on the memory 410 and runnable on the processor 420, where the computer program 430 runs to cause the method 20 shown in FIG. 2 to be performed.

According to a fourth aspect of the disclosure, there is further provided a computer-readable storage medium having a computer program stored thereon, where the program, when executed by a processor, implements the method 20 shown in FIG. 2. The computer-readable storage medium may include a random access memory (RAM) such as a synchronous dynamic random access memory (SDRAM), a read-only memory (ROM), a non-volatile random access memory (NVRAM), an electrically erasable programmable read-only memory (EEPROM), a flash memory, or another known storage medium.

Various embodiments provided in the disclosure may be implemented by hardware, software, or a combination of hardware and software where applicable. In addition, without departing from the scope of the disclosure, various hardware components and/or software components described herein may be combined into a combined component including software, hardware, and/or both where applicable. Without departing from the scope of the disclosure, various hardware components and/or software components described herein may be separated into sub-components including software, hardware, or both where applicable. In addition, where applicable, it is contemplated that software components can be implemented as hardware components, and vice versa.

Software (such as program code and/or data) in the disclosure may be stored on one or more computer storage media. It is also contemplated that the software identified herein can be implemented using one or more general-purpose or special-purpose computers and/or computer systems, networked and/or otherwise. The steps described herein can be changed in order, combined into compound steps, and/or divided into sub-steps where applicable, to provide the features described herein.

The embodiments and examples proposed herein are provided to describe as adequately as possible embodiments according to the disclosure and specific applications thereof and thus enable those skilled in the art to implement and use the disclosure. However, those skilled in the art will know that the above descriptions and examples are provided only for description and illustration. The proposed description is not intended to cover all aspects of the disclosure or limit the disclosure to the disclosed precise forms.

**Claims**

1. A method for determining a rotor resistance of an induction motor, comprising the following steps:

   A: obtaining a stator current reference, a stator voltage reference, and a stator current frequency of the induction motor;
   B: determining, on the basis of an equivalent circuit of the induction motor, a back-EMF inductance of the induction motor according to a voltage division principle and based on the stator current reference, the stator voltage reference, and the stator current frequency, wherein the back-EMF inductance is defined as an impedance of the induction motor excluding that for a stator resistance divided by the stator current frequency; and
   C: determining, on the basis of the equivalent circuit of the induction motor, the rotor resistance according to the definition of the back-EMF inductance and based on the determined back-EMF inductance.

2. The method according to claim 1, wherein step A comprises:

   obtaining three-phase current references $i_a^*$, $i_b^*$, and $i_c^*$ of the induction motor;

   obtaining a d-axis stator current reference $i_{sd}^*$ and a q-axis stator current reference $i_{sq}^*$ according to Clarke transform and Park transform; and

   obtaining a d-axis stator voltage reference $u_{sd}^*$ and a q-axis stator voltage reference $u_{sq}^*$ outputted by a PI controller that controls an output voltage based on a current error.

3. The method according to claim 1, wherein step B comprises:
determining the back-EMF inductance $L_\varepsilon$ of the induction motor by using a first model established according to the voltage division principle, wherein the first model satisfies the following equation:

$$L_\varepsilon = \frac{\sqrt{|u_s^*|^2 + R_s^2 |i_s^*|^2 - 2R_s(u_{sd}^* i_{sd}^* + u_{sq}^* i_{sq}^*)}}{\omega_e |i_s^*|}$$

wherein $u_s^*$ is the stator voltage reference, $i_s^*$ is the stator current reference, $u_{sd}^*$ and $u_{sq}^*$ are respectively the d-axis stator voltage reference and the q-axis stator voltage reference, $i_{sd}^*$ and $i_{sq}^*$ are respectively the d-axis stator current reference and the q-axis stator current reference, $R_s$ is the stator resistance, and $\omega_e$ is the stator current frequency.

4. The method according to claim 1, further comprising determining the stator resistance $R_s$ by using an off-line parameter identification method, and the stator current frequency $\omega_e$ is determined by using the following formula:

$$\omega_e = \omega_r + \omega_s$$

$$\omega_s = \frac{\hat{R}_r i_{sq}^*}{L_m i_{sd}^*}$$

wherein $\omega_r$ is a motor rotor speed, $\omega_s$ is a slip, $\hat{R}_r$ is a rotor resistance reference, $i_{sd}^*$ and $i_{sq}^*$ are respectively a d-axis stator current reference and a q-axis stator current reference, and $L_m$ is a magnetizing inductance.

5. The method according to claim 1, wherein step C comprises:
establishing a second model according to the definition of the back-EMF inductance, wherein the second model satisfies the following equation:

$$L_\varepsilon = \left| jL_\sigma + \frac{jL_m}{1 + \frac{j\hat{R}_r i_{sq}^*}{R_r i_{sd}^*}} \right|$$

wherein $L_\varepsilon$ is the back-EMF inductance, $L_\sigma$ is a leakage inductance, $L_m$ is a magnetizing inductance, $\hat{R}_r$ is a rotor resistance reference, $R_r$ is a real-time rotor resistance, and $i_{sd}^*$ and $i_{sq}^*$ are a d-axis stator current reference and a q-axis stator current reference, respectively.

6. The method according to claim 1, wherein step C comprises determining a real-time rotor resistance $R_r$ by using the following formula:

$$R_r = \frac{\hat{R}_r i^*_{sq}}{i^*_{sd} \sqrt{\left(\dfrac{1 + 2\dfrac{L_\sigma}{L_m}}{\dfrac{L_\varepsilon}{L_m} - \left(\dfrac{L_\sigma}{L_m}\right)^2} - 1\right)}}$$

wherein $\hat{R}_r$ is a rotor resistance reference, $i^*_{sd}$ and $i^*_{sq}$ are respectively a d-axis stator current reference and a q-axis stator current reference, $L_m$ is a magnetizing inductance, $L_\sigma$ is a leakage inductance, and $L_\varepsilon$ is the back-EMF inductance.

7. The method according to claim 1, further comprising determining a real-time rotor temperature $T_r$ by using the following formula:

$$T_r = \frac{(\dfrac{R_r}{R_{r,Ref}} - 1)}{\partial_r} + T_{ref}$$

wherein $R_r$ is a real-time rotor resistance, $\partial_r$ is a temperature rise coefficient of a rotor resistance, $T_{ref}$ is a reference temperature, and $R_{r,Ref}$ is a rotor resistance at the reference temperature $T_{ref}$.

8. The method according to claim 1, further comprising:
calibrating a back-EMF inductance reference in a motor testing stage to obtain a correspondence between the back-EMF inductance reference and a motor rotor speed reference as well as a torque reference, and storing the correspondence in a look-up table, wherein calibrating the back-EMF inductance reference comprises:
when the motor rotor speed reference and the torque reference are constant, adjusting a rotor resistance reference to change a real-time motor torque, and determining a back-EMF inductance, obtained when the real-time motor torque is equal to the torque reference, as the back-EMF inductance reference.

9. The method according to claim 8, further comprising:

in a normal operation stage of the motor, obtaining a back-EMF inductance reference corresponding to a motor rotor speed reference and a torque reference by looking up the table;
correcting the rotor resistance reference in real time through feedback compensation with a difference between the back-EMF inductance reference and the back-EMF inductance determined in step B, such that the difference is zero; and
determining a real-time rotor temperature based on the rotor resistance reference that is obtained when the difference is zero.

10. The method according to claim 9, wherein the determining a real-time rotor temperature based on the rotor resistance reference that is obtained when the difference is zero comprises determining the real-time rotor temperature $T_r$ according to the following formula:

$$T_r = \frac{(\dfrac{\hat{R}_r}{R_{r,Ref}} - 1)}{\partial_r} + T_{ref}$$

wherein $\hat{R}_r$ is the rotor resistance reference, $\partial_r$ is a temperature rise coefficient of a rotor resistance, $T_{ref}$ is a reference temperature, and $R_{r,Ref}$ is a rotor resistance at the reference temperature $T_{ref}$.

11. An apparatus for determining a rotor resistance of an induction motor, comprising:

    an information obtaining module configured to obtain a stator current reference, a stator voltage reference, and a stator current frequency of the induction motor;
    a back-EMF inductance calculation module configured to determine, on the basis of an equivalent circuit of the induction motor, a back-EMF inductance of the induction motor according to a voltage division principle and based on the stator current reference, the stator voltage reference, and the stator current frequency, wherein the back-EMF inductance is defined as an impedance of the induction motor excluding that for a stator resistance divided by the stator current frequency; and
    a rotor resistance determining module configured to determine, on the basis of the equivalent circuit of the induction motor, the rotor resistance according to the definition of the back-EMF inductance and based on the determined back-EMF inductance.

12. A computer device, comprising: a memory; a processor; and a computer program stored on the memory and runnable on the processor, wherein the computer program runs to cause a method according to any one of claims 1 to 10 to be performed.

13. A computer storage medium, comprising instructions, wherein the instructions run to perform a method according to any one of claims 1 to 10.

FIG. 1

**20**

FIG. 2

FIG. 3

FIG. 4